# EUROPÄISCHE PATENTSCHRIFT

(11) **EP 1 132 761 B1**
(45) Veröffentlichungstag und Bekanntmachung des Hinweises auf die Patenterteilung: **09.04.2003**
(21) Anmeldenummer: 01440042.8
(22) Anmeldetag: 23.02.2001
(51) Int. Cl.: G02B 6/44

(54) **Optisches Kabel**
Optical Cable
Câble Optique

(30) Priorität: 07.03.2000 DE 10010996
(43) Veröffentlichungstag der Anmeldung: 12.09.2001
(73) Patentinhaber: ALCATEL, 75008 Paris (FR)
(72) Erfinder: Nothofer Klaus, 40699 Erkrath (DE)
(74) Vertreter: Rausch, Gabriele, Dr.

(56) Entgegenhaltungen:
- EP-A- 0 284 900
- EP-A- 0 883 005
- GB-A- 2 215 480
- US-A- 5 155 789
- US-A- 5 389 442
- US-A- 5 703 984
- PATENT ABSTRACTS OF JAPAN vol. 007, no. 057 (P-181), 9. März 1983 (1983-03-09) & JP 57 204007 A (NIPPON DENSHIN DENWA KOSHA;OTHERS: 01), 14. Dezember 1982 (1982-12-14)

## Beschreibung

Die Erfindung betrifft ein optisches Kabel oder Kabelelement.

Es ist ein optisches Kabel bekannt, welches aus einer Vielzahl von einzelnen Lichtwellenleitern besteht. Die Lichtwellenleiter sind zu einzelnen Lichtwellenleiterbündeln zusammengefaßt, wobei jedes Lichtwellenleiterbündel von einer Hülle aus Kunststoff umgeben ist. Neben den Lichtwellenleitern befindet sich innerhalb der Hülle aus Kunststoff eine Masse aus inkompressiblem Material z. B. Petroleumjelly. Mehrere solcher Lichtwellenleiterbündel sind miteinander verseilt und der Verseilverband ist von einem Kunststoffmantel umgeben. Innerhalb der Wandung des Kunststoffmantels sind einander gegenüberliegend zwei zug- und stauchfeste Elemente eingebettet. (International Wire Cable Symposium Proceedings 1999, S. 106).

Dieses bekannte Kabel zeichnet sich aus durch eine hohe Faserdichte. So weist das Kabel bis zu 144 Fasern bei einem Außendurchmesser des Kabels von 13,5 mm auf. Die beiden im Kabelmantel befindlichen Zug-/Stauchelemente gewährleisten eine hohe Belastbarkeit des- Kabels gegen Zug und Druck. Ein weiterer Vorteil besteht darin, daß die Fasern gut zugänglich sind.

Der vorliegenden Erfindung liegt die Aufgabe zugrunde, ein Kabel bereitzustellen, welches die gleichen Vorteile wie das bekannte Kabel aufweist, aber einen kleineren Außendurchmesser bei gleicher Faserzahl bzw. bei gleichem Außendurchmesser eine höhere Faserzahl aufweist.

Diese Aufgabe wird durch das im Anspruch 1 Erfaßte gelöst.

Der wesentliche Vorteil des erfindungsgemäßen Kabels gegenüber dem bekannten Kabel ist darin zu sehen, daß auf die in der Wandung des Mantels befindlichen Zug/Stauchelemente verzichtet werden kann. Dadurch verbessert sich das Biegeverhalten des Kabels ganz erheblich. Die Zug-/Stauchstabilität wird von der durch den Außenmantel komprimierten Schicht aufgebracht. Die komprimierte Schicht hält darüber hinaus Querkräfte von den Lichtwellenleitern fern, was sich positiv auf die Übertragungseigenschaften auswirkt. Gegenüber dem bekannten Kabel wird eine Verringerung des Kabeldurchmessers von bis zu 25 % erreicht.

Die Erfindung ist anhand der in den Figuren 1 bis 3 schematisch dargestellten Ausführungsbeispiele näher erläutert.

Es zeigen:
- Fig. 1: ein Kabel mit 144 Fasern.
- Fig. 2: ein Kabel mit 1008 Fasern.
- Fig. 3: ebenfalls ein Kabel mit 1008 Fasern.

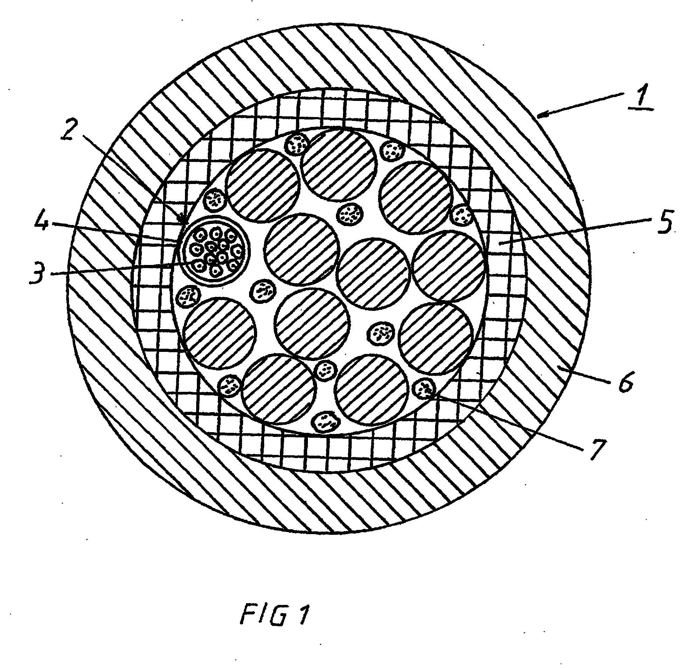

Das in Figur 1 dargestellte optische Kabel bzw. Kabelelement 1 besteht aus zwölf Lichtwellenleiterelementen 2, die miteinander verseilt sind, wobei die Schlagrichtung stets gleich ist oder nach einigen Drehungen wechselt (SZ-Verseilung).

Jedes Lichtwellenleiterelement enthält zwölf Lichtwellenleiter 3, die innerhalb einer dünnen Hülle 4 aus weichem Kunststoff angeordnet sind. Die dünne, weiche Hülle 4 macht es möglich, daß die Hülle 4 nur mit Hilfe der Hände bzw. Finger entfernt werden kann, so daß die Lichtwellenleiter 3 ohne zusätzliche Werkzeuge zugänglich werden.

Zwischen den Lichtwellenleitern 3 kann innerhalb der Hülle 4 noch eine inkompressible Masse befindlich sein, welche als Stütze für die dünne Hülle 4 dient und auch eine Längswasserdichtigkeit sicherstellt.

Der aus den Lichtwellenleiterelementen 2 gebildete Verseilverbund ist von einer Schicht 5 umgeben, welche als Zug-/Stauchschutz wirkt. Die Schicht 5 besteht vorzugsweise aus Glasgarnen. Über der Schicht 5 aus Glasgarnen befindet sich noch ein Mantel 6, z. B. aus Polyethylen, der so aufgebracht wird, daß die darunter liegende Schicht 5 komprimiert wird.

Die zwischen den Lichtwellenleiterelementen 2 und der Schicht 5 befindlichen Freiräume sind entweder mit einer Füllmasse ausgefüllt oder es befinden sich dort mehrere Fäden oder Garne 7 aus einem Material, welches bei Zutritt von Wasser aufquillt.

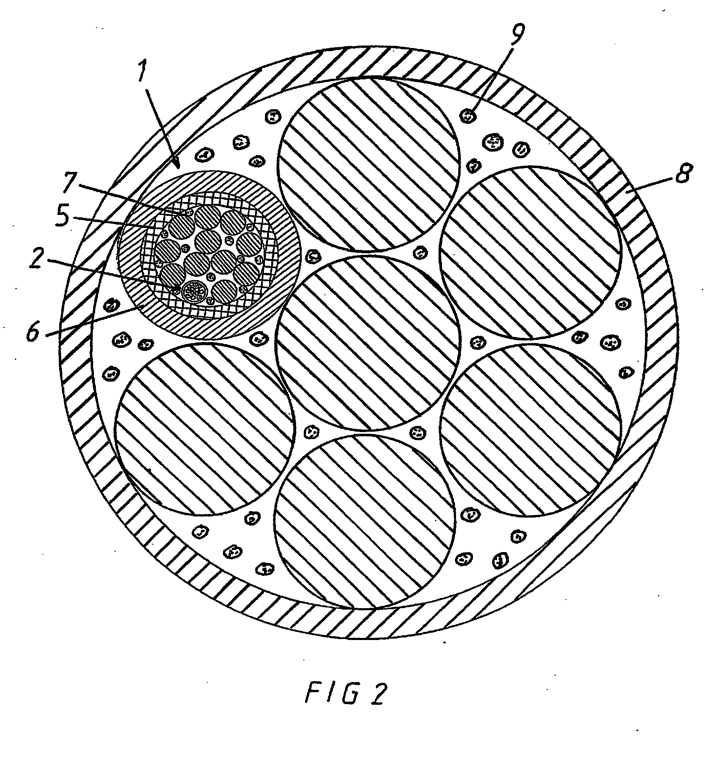

Figur 2 zeigt ein optisches Kabel, welches aus sieben miteinander verseilten Kabelelementen 1, wie in Figur 1 dargestellt besteht. Die Kabelelemente 1 sind entweder mit gleicher oder reversierender Schlagrichtung miteinander verseilt. Der aus den Kabelelementen 1 aufgebaute Verseilverband ist von einem Außenmantel 8 z. B. aus Polyethylen umgeben. In den freien Räumen zwischen den Kabelelementen 1 und dem Außenmantel 8 sind Fäden oder Garne 9 aus einem Material, welches bei Wasserzutritt quillt, angeordnet. Alternativ können die freien Räume auch mit einer Füllmasse z. B. Petroleumjelly ausgefüllt sein. Bei dieser Kabelkonstruktion kann zwischen dem Verseilverbund und dem Außenmantel 8 eine nicht dargestellte Schicht aus Glasfäden angeordnet sein, welche wie die Schicht 5 in Figur 1 durch den Außenmantel 8 komprimiert ist.

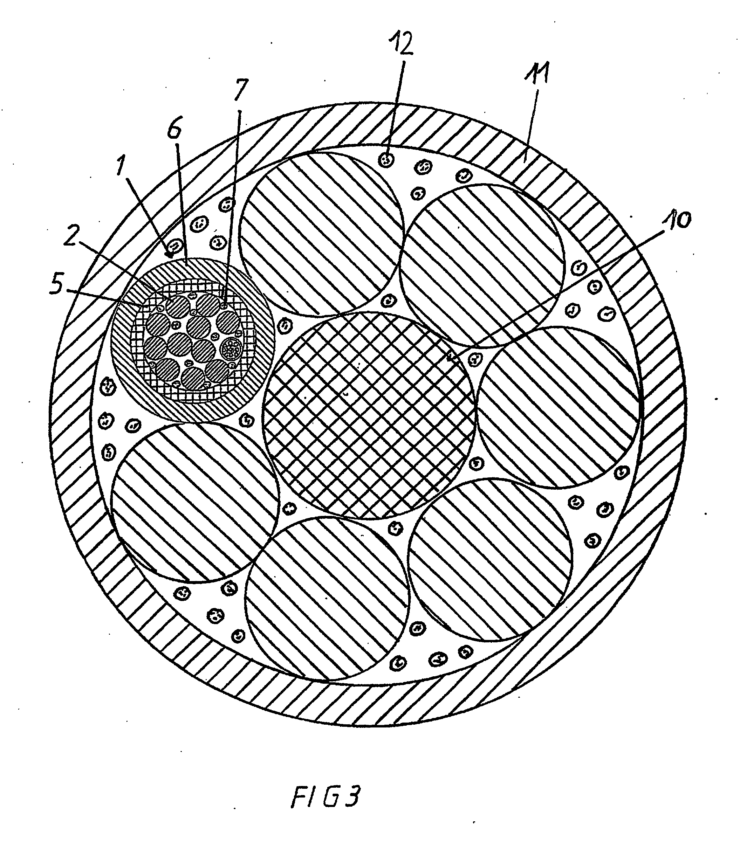

In Fig. 3 ist ein optisches Kabel dargestellt, welches ein zentrales Zug-/Stauchelement 10 z. B. aus glasfaserverstärktem Kunststoff aufweist, um welches sieben Kabelelemente 1 - wie in Figur 1 dargestellt- mit gleicher oder reversierender Schlagrichtung aufgeseilt sind. Der Verseilverband aus den Kabelelementen 1 ist von einem Außenmantel 11 z. B. aus Polyethylen umgeben.

In den freien Räumen zwischen den Kabelelementen 1 und dem Außenmantel 11 sind auch hier eine Vielzahl von Fäden oder Garnen 12 aus einem bei Feuchtigkeitszutritt quellendem Material angeordnet. Alternativ hierzu können die freien Räume durch eine Füllmasse z. B. auf der Basis von Petroleumjelly ausgefüllt sein.

## Patentansprüche

1. Optisches Kabel oder Kabelelement (1) mit einer Vielzahl von miteinander verseilten Lichtwellenleiterelementen (2), die jeweils aus mehreren zu einem Bündel zusammengefaßten Lichtwellenleitern (3) und einer das Bündel mit max. 0,1 mm Freiraum umschließenden Kunststoffhülle (4) sowie einer die Zwischenräume zwischen den Lichtwellenleitern ausfüllenden nicht komprimierbaren Füllmasse bestehen, **dadurch gekennzeichnet, daß** die Lichtwellenleiterelemente von einer Schicht (5) aus in Längsrichtung ausgerichteten Fasern aus Glas oder Kunststoff sowie einem extrudierten Außenmantel (6) aus einem Polymer umgeben sind, wobei der Außenmantel die Schicht in radialer Richtung komprimiert.

2. Optisches Kabel oder Kabelelement nach Anspruch 1, **dadurch gekennzeichnet, daß** in den Zwischenräumen zwischen den Lichtwellenleiterelementen und den zugund stauchfesten Fasern Fäden oder Garne (7) aus bei Feuchtigkeitszutritt quellendem Material angeordnet sind.

3. Optisches Kabel oder Kabelelement nach Anspruch 1, **dadurch gekennzeichnet, daß** in den Zwischenräumen zwischen den Lichtwellenleiterelementen (2) und den zugund stauchfesten Fasern eine feuchtigkeitssperrende Füllmasse vorhanden ist.

4. Optisches Kabel, bei dem mehrere Kabelelemente nach den Ansprüchen 1 bis 3 miteinander verseilt, und mit einem gemeinsamen Aussenmantel (8) versehen sind.

5. Optisches Kabel nach Anspruch 4, **dadurch gekennzeichnet, daß** in den Zwischenräumen zwischen den Kabelelementen Fäden oder Garne (9) aus bei Feuchtigkeitszutritt quellendem Material angeordnet sind.

6. Optisches Kabel nach Anspruch 4, **dadurch gekennzeichnet, daß** in den Zwischenräumen zwischen den Kabelelementen (1) eine feuchtigkeitssperrende Füllmasse vorhanden ist.

7. Optisches Kabel nach Anspruch 4, bei dem die Kabelelemente um einen zug- und stauchfesten Kern (10) herum verseilt sind und mit einem gemeinsamen Außenmantel (11) umgeben sind.

8. Optisches Kabel nach Anspruch 7, **dadurch gekennzeichnet, daß** in den Zwischenräumen zwischen den Kabelelementen und dem Außenmantel Fäden oder Garne (12) aus einem bei Feuchtigkeitszutritt quellendem Material vorgesehen sind.

9. Optisches Kabel nach Anspruch 7, **dadurch gekennzeichnet, daß** in den Zwischenräumen zwischen den Kabelelementen und dem Außenmantel (11) eine Füllmasse angeordnet ist.

## Claims

1. Optical cable or cable element (1) with a multiplicity of optical-waveguide elements (2) stranded together, which each consist of a plurality of optical waveguides (3) combined to form a bundle and a plastic sheath (4) surrounding the bundle with at most 0.1 mm of free space, as well as an incompressible filler compound filling the gaps between the optical waveguides, **characterised in that** the optical-waveguide elements are enclosed by a layer (5) of glass or plastic fibres oriented in the longitudinal direction as well as an extruded outer jacket (6) made of a polymer, the outer jacket compressing the layer in the radial direction.

2. Optical cable or cable element according to Claim 1, **characterised in that** threads or yarns (7) of material which swells when moisture enters are arranged in the gaps between the optical-waveguide elements and the fibres, which are resistant to tension and compression.

3. Optical cable or cable element according to Claim 1, **characterised in that** a moisture-blocking filler compound is present in the gaps between the optical-waveguide elements (2) and the tension- and compression-resistant fibres.

4. Optical cable in which a plurality of cable elements according to Claims 1 to 3 are stranded together and are provided with a common outer jacket (8).

5. Optical cable according to Claim 4, **characterised in that** threads or yarns (9) of material which swells when moisture enters are arranged in the gaps between the cable elements.

6. Optical cable according to Claim 4, **characterised in that** a moisture-blocking filler compound is present in the gaps between the cable elements (1).

7. Optical cable according to Claim 4, in which the cable elements are stranded around a tension- and compression-resistant core (10) and are enclosed by a common outer jacket (11).

8. Optical cable according to Claim 7, **characterised in that** threads or yarns (12) of material which swells when moisture enters are provided in the gaps between the cable elements and the outer jacket.

9. Optical cable according to Claim 7, **characterised in that** a filler compound is arranged in the gaps between the cable elements and the outer jacket (11).

## Revendications

1. Câble optique ou élément de câble optique (1) avec une multitude d'élément de guides d'ondes lumineuses (2) qui consistent en plusieurs guides d'ondes lumineuses (3) assemblés en un faisceau, et avec une enveloppe de plastique (4) entourant le faisceau avec un espace libre de 0,1 mm au maximum, ainsi qu'avec une masse de remplissage incompressible qui remplit les interstices entre les guides d'ondes lumineuses, **caractérisé en ce que** les éléments de guides d'ondes lumineuses sont entourés par une couche (5) de fibres de verre ou de plastique orientées dans le sens de la longueur, ainsi que d'une enveloppe extérieure (6) extrudée, l'enveloppe comprimant la couche dans le sens radial.

2. Câble optique ou élément de câble optique selon la revendication 1, **caractérisé en ce que** dans les interstices entre les éléments de guides d'ondes lumineuses et les fibres résistantes à la traction et à l'écrasement sont disposés des fils (7) en un matériau qui gonfle en cas d'intrusion d'humidité.

3. Câble optique ou élément de câble optique selon la revendication 1, **caractérisé en ce que** dans les interstices entre les éléments de guides d'ondes lumineuses (2) et les fibres résistantes à la traction et à l'écrasement se trouve une masse de remplissage faisant obstacle à l'humidité.

4. Câble optique, pour lequel plusieurs éléments de câble conformément aux revendications 1 à 3 sont toronnés ensemble et dotés d'une enveloppe extérieure (8) commune.

5. Câble optique selon la revendication 4, **caractérisé en ce que**, dans les interstices entre les éléments de câble, sont disposés des fils (9) en un matériau qui gonfle en cas d'intrusion d'humidité.

6. Câble optique selon la revendication 4, **caractérisé en ce que**, dans les interstices entre les éléments de câble, se trouve une masse de remplissage faisant obstacle à l'humidité.

7. Câble optique selon la revendication 4, pour lequel les éléments de câble sont toronnés autour d'un élément central résistant à la traction et à l'écrasement (10) et sont entourés d'une enveloppe extérieure (11) commune.

8. Câble optique selon la revendication 7, **caractérisé en ce que** dans les interstices entre les éléments de câble et l'enveloppe extérieure sont disposés des fils (12) en un matériau qui gonfle en cas d'intrusion d'humidité.

9. Câble optique selon la revendication 7, **caractérisé en ce que** dans les interstices entre les éléments de câble et l'enveloppe extérieure (11) se trouve une masse de remplissage.
